Europäisches Patentamt

European Patent Office

Office européen des brevets

(11) Veröffentlichungsnummer: **0 299 443**
**A2**

## (12) EUROPÄISCHE PATENTANMELDUNG

(21) Anmeldenummer: 88111165.2

(22) Anmeldetag: 12.07.88

(51) Int. Cl.4: **G01N 27/82**

(30) Priorität: 15.07.87 DE 3723360

(43) Veröffentlichungstag der Anmeldung:
18.01.89 Patentblatt 89/03

(84) Benannte Vertragsstaaten:
DE FR GB IT

(71) Anmelder: **Nukem GmbH**
**Rodenbacher Chaussee 6 Postfach 11 00 80**
**D-6450 Hanau 11(DE)**

(72) Erfinder: **Hüschelrath, Gerhard, Dr.-Ing.**
**Beethovenstrasse 6**
**D-8752 Laufach-Frohnhofen(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) Verfahren und Vorrichtung zur zerstörungsfreien Prüfung ferromagnetischer Körper mittels Magnetisierung.

(57) Gegenstand der Erfindung sind ein Verfahren und eine Vorrichtung zur zerstörungsfreien Prüfung längsverschiebbarer, länglicher Körper (14) auf Gefügestörungen mittels Magnetisierung des jeweiligen Körpers (14). Auf den Körper (14) ist mindestens ein Magnetfeld ausgerichtet. Die Gefügestörungen im Körper rufen Veränderungen des Magnetfeldverlaufs hervor. Die Veränderungen werden von an oder nahe an der Körperoberfläche angeordneten Magnetfeldsonden (50, 52) erfaßt. Der jeweilige Körper (14) wird durch das Magnetfeld hindurchbewegt, das gegen die Transportrichtung (26) des Körpers (14) eine Neigung von vorzugsweise 45° aufweist. Die Magnetfeldsonden (50, 52) sind quer zur Richtung des Magnetfelds orientiert.

FIG.: 2

## Verfahren und Vorrichtung zur zerstörungsfreien Prüfung ferromagnetischer Körper mittels Magnetisierung

Die Erfindung bezieht sich auf ein Verfahren zur zerstörungsfreien Prüfung längsverschiebbarer, länglicher, ferromagnetischer Körper auf Gefügestörungen mittels Magnetisierung des jeweiligen Körpers, auf den mindestens ein Magnetfeld gerichtet ist und in dem Gefügestörungen Veränderungen des Magnetfeldverlaufs hervorrufen, die von an oder nahe an der Körperoberfläche angeordneten Magnetfeldsonden erfaßt werden, und auf eine Vorrichtung zur Durchführung des Verfahrens.

Zur Zeit verfügbare Prüfanlagen, die nach dem Streufluß-Prinzip arbeiten, sind bei der Rohrprüfung entweder für Längs- oder Querfehlerdetektionen ausgelegt. Für die Längsfehlerprüfung werden zumeist Rotationsprüfanlagen eingesetzt, da sich diese wegen der benötigten Magnetisierung quer zur Rohrlängsachse anbieten. Die Magnetfeldsonden schneiden die Streufeldlinien direkt und liefern daher bei Fehlern im Material ein optimales Signal. Querfehler lassen sich mit einer solchen Prüfanlage nicht feststellen, da diese Fehler in Feldrichtung verlaufen und praktisch keinen auswertbaren Streufluß erzeugen. Deshalb ist dort, wo in Prüflingen auch Querfehler auftreten können, zusätzlich eine Querfehlerprüfanlage notwendig. Für diese Prüfung wird ein Magnetfeld in der Rohrachse erzeugt, während ein stehender Magnetfeldsondensatz um das Rohr herum angeordnet ist. Dies bedeutet, daß für eine vollständige Prüfung zwei komplette Prüfanlagen mit Magnetfeldsonden und den Mitteln zur Magnetisierung der Prüflinge notwendig sind.

Es ist auch möglich, die von Gefügefehlern hervorgerufenen Streuflüsse ohne mechanische Rotation der Prüflinge festzustellen. Hierzu werden Gradientensonden in mindestens einer Reihe längs des Umfangs des Prüflings quer zu dessen Transportrichtung angeordnet. Die Gradientensonden werden mit einer Auswerteelektronik verbunden, die die Gradientensonden nacheinander abtastet. Um die Meßgenauigkeit unabhängig von örtlich vorhandenen statischen Magnetfeldern zu machen, werden den Gradientensonden lageabhängig Kompensationswerte zugeordnet.

Die mechanische Rotation einer Prüfsonde einer Längsfehlerprüfanlage wird durch das elektronische Abtasten der Einzelsonden ersetzt. Dieses Abtasten erfolgt trägheitslos und beeinflußt dadurch die Meßbedingungen nicht, wie das bei einem rotierenden Magnetjoch durch induzierte Wirbelströme geschieht.

Der Erfindung liegt die Aufgabe zugrunde, ein Verfahren der eingangs beschriebenen Art so weiterzuentwickeln, daß sich Gefügestörungen feststellen lassen, die in Transportrichtung des Körpers oder quer zur Transportrichtung des Körpers oder dazwischen verlaufen.

Die Aufgabe wird erfindungsgemäß durch ein Verfahren gelöst, das sich dadurch auszeichnet, daß das Magnetfeld, durch das der jeweilige Körper hindurchbewegt wird, gegen die Transportrichtung des Körpers eine Neigung von mehr als 0° und weniger als 90° hat und daß die Magnetfeldsonden quer zur Richtung des Magnetfelds orientiert werden.

Mit diesem Verfahren können Querfehler und Längsfehler sowie Fehler erfaßt werden, die eine zwischen den Quer- und Längsfehlern liegende Orientierung haben. Die Höhe des jeweils von einem Fehler verursachten Meßwerts hängt von der Projektion der Feldlinien des Streuflusses auf die Magnetfeldsensoroberfläche ab. Aufgrund der Neigung der Richtung des Magnetfeldes gegen die Transportrichtung des jeweiligen Prüflings wird bei Längs- und Querfehlern je ein Meßwert erhalten, der etwas geringer ist als derjenige Meßwert, der sich ergibt, wenn der Fehler sich in einem rechten Winkel zum Magnetfeld erstreckt.

Vorzugsweise rotiert der Körper während der Bewegung in Transportrichtung um seine Längsachse. Mit dieser Methode können Fehler beliebiger Orientierungsrichtung erfaßt werden.

Eine Vorrichtung zur Durchführung des Verfahrens kann sich dadurch auszeichnen, daß ein Elektromagnet zwei Magnetpolschuhe enthält, deren Stirnflächen sich im Abstand gegenüberstehen, daß die Magnetpolschuhe je eine Aussparung für den Durchlaß des Körpers aufweisen, daß die Neigung der Stirnflächen gegenüber der Transportrichtung des Körpers mehr als 0° und weniger als 90° ist und daß im Luftspalt entlang der Außenseite des Körpers die Magnetfeldsonden angeordnet sind.

Insbesondere zeichnet sich jedoch eine Vorrichtung zur Durchführung des Verfahrens erfindungsgemäß dadurch aus, daß ein Elektromagnet zwei Magnetpolschuhe enthält, die sich an oder nahe an der Oberfläche des Körpers in einer den Körper teilweise überdeckenden Zone durch einen Luftspalt voneinander getrennt mit ihren Stirnflächen in einer Neigung gegenüber der Transportrichtung des Körpers gegenüberstehen, die mehr als 0° und weniger als 90° beträgt, daß die Zone quer zur Transportrichtung des Körpers mindestens eine Ausdehnung hat, die einer Drehung des Körpers um seine Längsachse von 90° entspricht, daß im Luftspalt die Reihe von Magnetfeldsonden entsprechend der Ausdehnung der Zone quer zur Transportrichtung angeordnet ist und daß Mittel zur Rotation des Körpers während seiner Verschiebung in Transportrichtung vorgesehen sind. Diese Vorrichtung eignet sich insbesondere für Körper, die große Durchmesser haben. Es ist nicht erforderlich bei derartigen Körpern die Magnetpolschuhe in Umfangsrichtung des Körpers geschlossen vorzusehen.

Die Neigung der Stirnflächen gegenüber der Transportrichtung sollte zwischen 30° und 60° und vorzugsweise bei 45° liegen. In diesem Fall werden die Längs- und Querfehler im Körper mit jeweils ungefähr 70 % ihrer maximal möglichen Amplitude erfaßt, d.h., Längs- und Querfehler werden mit etwa 3 db geschwächt erfaßt. Eine solche geringe Reduzierung ist in Folge der Möglichkeit, mit einer kontruktiv sehr einfach aufgebauten Vorrichtung sowohl Längs- als auch Querfehler messen zu können, annehmbar. Dieser Nachteil kann bei zwei orthogonalen Magnetspalten durch eine Ausgleichsrechnung

$$\sqrt{x^2 + Y^2}$$

beseitigt werden, wenn dies unbedingt notwendig sein sollte. Die Meßwerte müssen allerdings ortsgetreu verarbeitet werden.

Bei einer günstigen Ausführungsform sind in den Aussparungen oder in den dem Körper jeweils zugewandten Polschuhflächen Polschuheinsätze zur Anpassung an die äußeren Abmessungen des jeweiligen Körpers befestigbar.

Eine besonders günstige Vorrichtung zur Durchführung des durch die Erfindung vorgeschlagenen Verfahrens besteht darin, daß jeweils zwei Paare von Magnetpolschuhen in Transportrichtung des Körpers hintereinander je mit ihren Stirnseiten im Abstand voneinander gegen die Transportrichtung des Körpers unter Winkeln angeordnet sind, die +45° und -45° betragen.

Mit einer derartigen Anordnung lassen sich ohne Rotation des Körpers während der Prüfung auch solche Fehler feststellen, die sich in Richtung des Magnetfelds im Körper erstrecken. In der um 180° gedrehten Stellung des Körpers werden diese Fehler mit ihrem maximal möglichen Wert erfaßt. Es ist günstig, wenn sich die einanderbenachbarten Magnetpolschuhe der beiden Elektromagneten an ihren einander zugewandten Enden zumindest berühren. Damit wird die Länge der Anordnung vermindert.

Vorzugsweise sind die Magnetfeldsonden Halleffekt-Gradientensonden, an die eine Auswerteelektronik angeschlossen ist.

Weitere Einzelheiten und Vorteile der Erfindung ergeben sich aus den Ansprüchen und den diesen zu entnehmenden Merkmalen -für sich und/oder in Kombination-.

An Hand der nachfolgenden Beschreibung von der Zeichnung zu entnehmenden Ausführungsbeispielen ergeben sich weitere Einzelheiten, Vorteile und Merkmale der Erfindung.

Es zeigen:

Fig. 1 ein Diagramm mit Vektoren der Luftspaltorientierung, der Magnetinduktionsorientierung und verschiedener Fehlerorientierungen.

Fig. 2 eine Vorrichtung zur zerstörungsfreien Prüfung ferromagnetischer Körper mittels Magnetisierung in Seitenansicht, teilweise im Längsschnitt und

Fig. 3 eine weitere Vorrichtung zur zerstörungsfreien Prüfung ferromagnetischer Körper mittels Magnetisierung in Seitenansicht, teilweise im Längsschnitt.

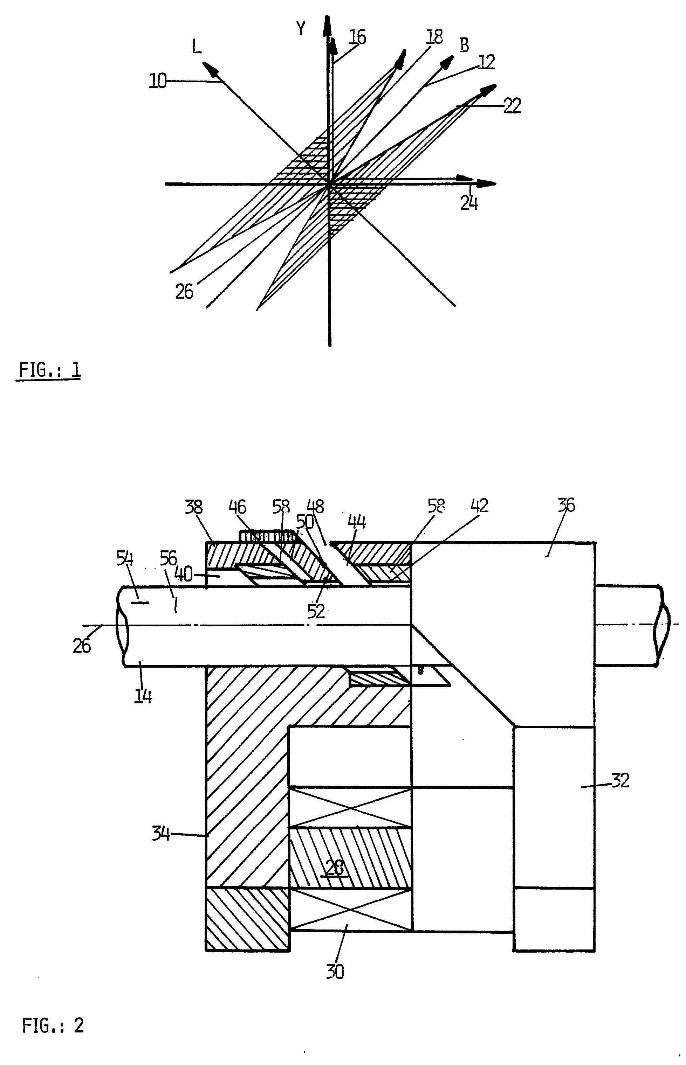

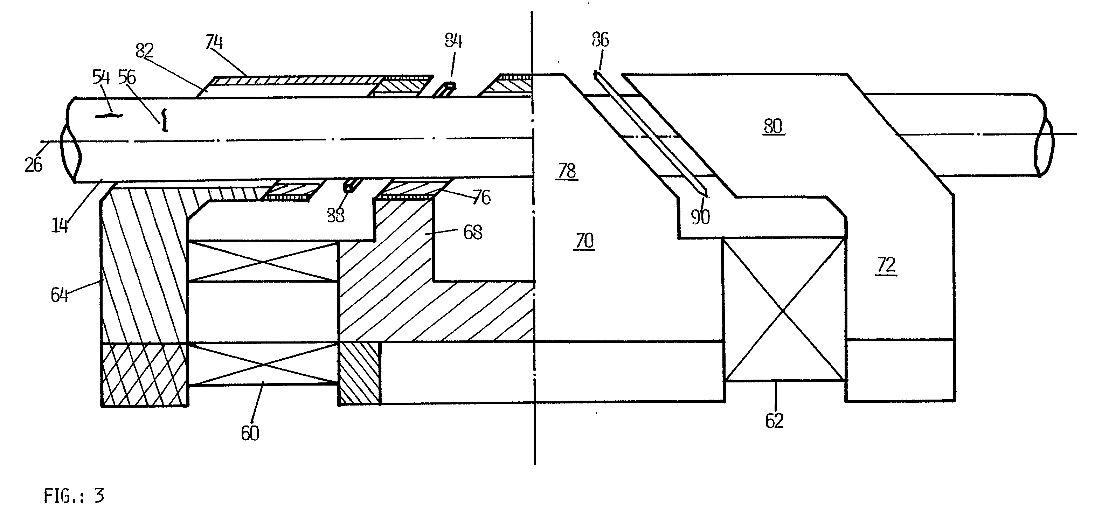

In Fig. 1 ist in einem karthesischen Koordinatensystem mit einer Abszissen- und einer Ordinatenachse ein Vektor (10) dargestellt, der den Verlauf eines Luftspalts über eine größere Strecke von gleichbleibender Stärke zwischen zwei Magnetpolschuhen darstellt. Senkrecht zu dem Vektor (10) verläuft in dieser Strecke ein Vektor (12) für die magnetische Induktion, die in Fig. 1 mit **B** bezeichnet ist. Dieser magnetischen Induktion wird ein ferromagnetischer Körper (14) ausgesetzt, der in Fig. 2 und 3 dargestellt ist und senkrecht zur Ebene der Darstellung in Fig. 1 verschoben wird. Es handelt sich bei diesem Körper um ein Rohr oder eine Stange. Im Körper (14) können Gefügefehler, z.B. Risse, Lunker oder Löcher, im Folgenden kurz als Fehler bezeichnet, vorhanden sein, die z.B. gegenüber den Vektoren (10) und (12) unterschiedliche Richtungen aufweisen. In Fig. 1 sind für verschieden orientierte Fehler die Richtungsvektoren (16), (18), (22) und (24) angegeben. Die Vektoren (16), (24) erstrecken sich je in Richtung der Ordinate und Abszisse. Die Vektoren (18), (22) sind gegen die Abszisse um 30° bzw. 60° geneigt. Die von Magnetfeldsonden, insbesondere Hall-Gradientensonden, die sich in Richtung des Vektors (12) erstrecken, erfaßten Fehler sich gegenüber den maximal meßbaren Amplituden, die sich bei senkrechtem Verlauf der Fehler in bezug auf die magnetische Induktion **B** ergeben, bei den Vektoren (16), (18), (22) und (24) jeweils um 3 db, 6 db, 6 db, und 3 db kleiner. Dies ergibt sich aufgrund der Projektion der Vektoren (16), (18), (22) und (24) auf den Vektor (10). Durch diese Projektion ergeben sich für die Vektoren (18) und (22) etwa 50 % und für die Vektoren (16), (24) etwa 70 % geringere Werte als der Maximalwert.

Die Richtung, in der der Körper (14) bewegt wird, verläuft senkrecht zur Darstellungsebene der Fig. 1 und ist mit (26) bezeichnet. Es handelt sich um die Längs- bzw. Transportrichtung des länglichen Körpers (14).

Ein Elektromagnet enthält ein Joch (28) mit einer Wicklung (30). An das Joch (28) schließen sich beiderseits der Stirnseite zwei Schenkel (32), (34) an, die in Polschuhe (36). (38) übergehen. Die Polschuhe (36), (38) weisen je eine Ausnehmung (40), (42) auf. durch die der Körper (14) während der Prüfung hindurchbewegt wird. Die Querschnitte der Ausnehmungen (40). (42) sind an die Abmessungen des Körpers (14) angepaßt, d.h., kreisförmig, wenn der Körper (14) ein Rohr oder eine zylindrische Stange ist.

Die Polschuhe (36), (38) weisen zwei Stirnflächen (44), (46) auf, die sich in gleichbleibendem Abstand eines Luftsspaltes (48) gegenüberstehen. Gegen die Längs- bzw. Transportrichtung (26) sind die Stirnflächen (44), (46) unter einem Winkel von 45° geneigt angeordnet. Im Luftspalt (48) sind an nicht näher bezeichneten Haltern Kränze von Magnetfeldsonden (50), (52) angeordnet. bei denen es sich vorzugsweise um Halleffekt-Gradientensonden handelt. die unter der Type KSY-20 von der Firma Siemens AG, kommerziell erhältlich sind. Die Ebenen der Hallgeneratorflächen verlaufen in Richtung der magnetischen Induktion **B**.

Bei der Vorrichtung gemäß Fig. 2 ergeben sich im übrigen die in Fig. 1 dargestellten Verhältnisse zwischen Luftspalt, Vektor (10) und Vektor (12) der magnetischen Induktion.

Im Körper (14) sind in Fig. 2 schematisch zwei Fehler durch Striche (54) und (56) dargestellt. Der Fehler (54) ist ein Längsfehler. d.h., ein Fehler. der sich in Längs- bzw. Transportrichtung (26) des Körpers (14) erstreckt. Der Fehler (56) verläuft quer zum Fehler (54), d.h., auch quer zur Längs-bzw. Transportrichtung (26). Die beiden Fehler (54), (56) stellen zwei Extremlagen für Fehler dar. Die Fehler (54), (56) werden mit der im Zusammenhang mit Fig. 1 erläuterten Schwächung von den Magnetfeldsensoren (50), (52) erfaßt und von einer nachgeschalteten, nicht näher dargestellten Auswertelektronik weiterverarbeitet, die an sich bekannt ist. Die Auswertelektronik enthält z.B. an die Magnetfeldsonden angeschlossene Verstärker, denen Multiplexer nachgeschaltet sind, deren Ausgänge über einen Kompensationsverstärker, dem je nach der Lage der Magnetfeldsonden im Luftspalt ein Kompensationswert zugeführt wird, an einen Mikrocomputer angeschlossen sind.

Mit dem Mikrocomputer kann ein optisches Anzeigegerät verbunden sein.

Um die Prüfeinrichtung an Körper (14) mit unterschiedlichen Durchmessern anpassen zu können, sind Polschuheinsätze (58) vorgesehen. Die vom Elektromagneten erzeugte Induktion wird über die Polschuhe (36), (38) auf den Körper (14) übertragen. Die Fehler (54), (56) sowie Fehler, deren Orientierung zwischen den Orientierungen der beiden Fehler (54), (56) liegt. erzeugen Streuflüsse, die von den Magnetfeldsonden (50), (52) erfaßt werden. Um zu verhindern, daß Fehler, die sich in Richtung des Vektors (12) erstrecken, nicht erfaßt werden, wird der Körper (14) rotierend in Längs-bzw. Transportrichtung (26) bewegt. Damit lassen sich Fehler in allen Richtungen im Körper (14) messen. Dieses Verfahren ist insbesondere bei Rohren mit großen Außendurchmessern, z.B. von mehr als 250 mm. günstig. Die in Reihe angeordneten Magnetfeldsonden (50), (52) werden dabei mit großer Geschwindigkeit im Vergleich zur Drehzahl des Körpers (14) abgetastet.

Bei großen Durchmessern können die Magnetpolschuhe auch so ausgebildet sein. daß sie nicht den ganzen Körper (14) umgreifen. Es werden dabei Magnetpolschuhe verwendet. die einen Bereich auf dem Körper (14) überdecken, der von einer Stelle an der Oberfläche des Körpers (14) bei einer 90°-Drehung um die Längs- bzw. Transportachse (26) beschrieben wird. Die Magnetfeldsensoren sind ebenfalls in einer Reihe längs dieses Weges angeordnet. Damit sind Fehler im Körper (14) unabhängig von ihrer Richtung feststellbar. Die Vorrichtung benötigt auch bei großen Durchmessern ein relativ geringes Volumen.

Falls das Rotieren des Körpers (14) nicht möglich oder zu aufwendig ist. können Fehler mit unterschiedlichen Richtungen durch eine Doppelspaltmagnetisierung erfaßt werden. Eine Vorrichtung zur Doppelspaltmagnetisierung ist in Fig. 3 dargestellt.

Die Vorrichtung gemäß Fig. 3 enthält zwei Elektromagneten mit je einem Joch. Die Joche sind nicht näher bezeichnet. Auf den Jochen befinden sich zwei Spulen (60), (62). An die Joche grenzen beiderseits Schenkel (64), (68) bzw. (70). (72) an. Die Schenkel (64). (68). (70). (72) gehen je in Magnetpolschuhe (74), (76), (78). (80) über. die jeweils eine zentrische Aussparung (82) für den Durchtritt des Körpers (14) aufweisen. Die nicht näher bezeichneten Stirnflächen der Polschuhe (74). (76) und (78). (80) stehen sich in gleich großen Abständen gegenüber.

In bezug auf die Längs- bzw. Transportachse (26) sind die Stirnflächen der Polschuhe (74), (76) und (78), (80) jeweils um +45° und -45° geneigt angeordnet. Um die Länge der Vorrichtung möglichst gering zu halten, gehen die Polschuhe (76) und (80) der beiden Magneten an ihren den Jochen abgewandten Enden ineinander über. Innerhalb der Luftspalten (84), (86) sind Kränze von Magnetfeldsensoren (88), (90) angeordnet.

Die Doppelmagnetisierung stellt durch die zwei um +45° und -45° gegenüber der Längsachse geneigten Magnetisierungs- und Abtastebenen auch ohne Rotation des Körpers (14) sicher, daß jede Fehlerlage wenigstens mit 70 % der maximalen Anzeigehöhe erfaßt wird.

Die Vorrichtung gemäß Fig. 3 bietet zusätzlich den Vorteil, daß für die Prüfgeschwindigkeit rein meßtechnisch nach unten wie nach oben keine Einschränkungen bestehen. Es sind jedoch eine zweifache Sondenbestückung und ein zweites Joch notwendig. Hinzu kommt, daß die Einbaulänge anwächst, wodurch größere Rohrtoleranzen berücksichtigt werden müssen.

### Ansprüche

1. Verfahren zur zerstörungsfreien Prüfung längsverschiebbarer, länglicher, ferromagnetischer Körper (14) auf Gefügestörungen mittels Magnetisierung des jeweiligen Körpers, auf den mindestens ein Magnetfeld gerichtet ist und in dem die Gefügestörungen Veränderungen des Magnetfeldverlaufs hervorrufen, die von an oder nahe an der Körperoberfläche angeordneten Magnetfeldsonden (50, 52) erfaßt werden,
**dadurch gekennzeichnet,**
daß das Magnetfeld, durch das der jeweilige Körper (14) hindurchbewegt wird, gegen die Transportrichtung (26) des Körpers (14) eine Neigung von mehr als 0° und weniger als 90° hat und daß die Magnetfeldsonden (50, 52) quer zur Richtung des Magnetfelds orientiert werden.

2. Verfahren nach Anspruch 1,
**dadurch gekennzeichnet,**
daß der Körper (14) während der Bewegung in Transportrichtung um seine Längsachse rotiert.

3. Verfahren nach Anspruch 1 oder 2,
**dadurch gekennzeichnet,**
daß die Neigung zwischen der Transportrichtung (26) und der Richtung des Magnetfelds auf 30° bis 60°, vorzugsweise auf 45° eingestellt wird.

4. Vorrichtung zur Durchführung des Verfahrens nach Anspruch 1,
**dadurch gekennzeichnet,**
daß ein Elektromagnet zwei Magnetpolschuhe (36, 38) enthält, deren Stirnflächen (44, 46) sich im Abstand gegenüberstehen, daß die Magnetpolschuhe (36, 38) je eine Aussparung (40, 42) für den Durchlaß des Körpers (14) aufweisen, daß die Neigung der Stirnflächen (44, 46) gegenüber der Transportrichtung (26) des Körpers (14) mehr als 0° und weniger als 90° ist und daß im Luftspalt (48) entlang der Außenseite des Körpers (14) die Magnetfeldsonden (50, 52) angeordnet sind.

5. Vorrichtung zur Durchführung des Verfahrens nach Anspruch 1 und 2,
**dadurch gekennzeichnet,**
daß ein Elektromagnet zwei Magnetpolschuhe enthält, die sich an oder nahe an der Oberfläche des Körpers in einer den Körper teilweise überdeckenden Zone durch einen Luftspalt voneinander getrennt mit ihren Stirnflächen in eine Neigung gegenüber der Transportrichtung des Körpers gegenüberstehen, die mehr als 0° und weniger als 90° beträgt, daß die Zone quer zur Transportrichtung des Körpers wenigstens eine Ausdehnung hat, die einer Drehung des Körpers um seine Längsachse von 90° entspricht, daß im Luftspalt eine Reihe von Magnetfeldsonden entsprechend der Ausdehnung der Zone quer zur Transportrichtung angeordnet sind und daß Mittel zur Rotation des Körpers während seiner Verschiebung in Transportrichtung vorgesehen sind.

6. Vorrichtung nach Anspruch 4 oder 5,
**dadurch gekennzeichnet,**
daß die Neigung der Stirnflächen (44, 46) gegen die Transportrichtung 45° ist.

7. Vorrichtung nach einem der Ansprüche 4 bis 6,
**dadurch gekennzeichnet,**
daß in den Aussparungen (40, 42) oder in den dem Körper jeweils zugewandten Polschuhflächen Polschuheinsätze (58) zur Anpassung an die äußeren Abmessungen des Körpers befestigbar sind.

8. Vorrichtung nach insbesondere Anspruch 4,
**dadurch gekennzeichnet,**
daß von zwei Elektromagneten zwei Paar von Magnetpolschuhen (74, 76; 78, 80) in Transportrichtung (26) des Körpers (14) hintereinander je mit ihren Stirnseiten im Abstand voneinander gegen die Transportrichtung (26) des Körpers unter Winkeln angeordnet sind, die jeweils +45° und -45° betragen.

9. Vorrichtung nach Anspruch 8,
**dadurch gekennzeichnet,**
daß sich die einander benachbarten Magnetpolschuhe (76, 78) der beiden Elektromagneten an ihren einander zugewandten Enden zumindest berühren.

10. Vorrichtung nach einem der Ansprüche 3 bis 9,
**dadurch gekennzeichnet,**
daß die Magnetfeldsonden (50, 52; 88) Halleffekt-Gradientensonden sind, an die eine Auswertelektronik angeschlossen ist.

FIG.: 1

FIG.: 2

FIG.: 3

EP 0 299 443 A2